# EUROPÄISCHE PATENTANMELDUNG

(11) **EP 2 985 241 A1**
(43) Veröffentlichungstag der Anmeldung: **17.02.2016**
(21) Anmeldenummer: 14405064.8
(22) Anmeldetag: 15.08.2014
(51) Int. Cl.: B65G 1/04

(54) **Anlage zum Lagern von Gegenständen**

(71) Anmelder: Güdel Group AG, 4900 Langenthal (CH)
(72) Erfinder: Windler, Martin, CH-3014 Bern (CH); Zulauf, Walter, CH-4937 Ursenbach (CH); Schrag, Roman, CH-3425 Koppigen (CH)
(74) Vertreter: Rüfenacht, Philipp Michael

(57) **Zusammenfassung**

Die Erfindung betrifft eine Anlage zum Stapeln von Gegenständen (50) in einem Lagerraum. Die Anlage besteht aus einer Portalstruktur für zwei Lagerbereiche (1, 2), die übereinander angeordnet sind. Jeder Lagerbereich (1, 2) besitzt je eine Portalbrücke (101, 202) mit je einen bewegbaren Schlitten (108, 208) mit vertikal verschiebbaren Greifern (109, 209). Die beiden Lagerbereiche (1, 2) werden durch einen Zwischenboden (30) getrennt. Dieser Zwischenboden (30) dient als Ablagefläche der Gegenstände (50). Es ist eine Vorrichtung vorhanden, die es ermöglicht, Gegenstände (50) zwischen den beiden Lagerbereiche auszutauschen. Zudem gibt es Vorrichtungen (121, 122, 221, 222) mit denen Gegenstände (50) zu den Lagerbereichen (1, 2) geführt werden respektive mit denen Gegenstände (50) von den Lagerbereichen (1, 2) weggeführt werden. Indem zwei Lagerbereiche (1, 2) übereinander vorhanden sind, kann ein Lagerraum in der Höhe besser ausgenutzt werden.

## Beschreibung

### Technisches Gebiet

Die Erfindung betrifft eine Anlage zum Lagern von Gegenständen in einem Lagerraum.

### Stand der Technik

Es gibt verschiedene Anlagen, die die Handhabung von Gegenständen in einem Lagerraum ermöglichen. Dabei kann der Lagerraum sich in einem Gebäude befinden, zum Beispiel einer Lagerhalle, oder der Lagerraum ist ein ausserhalb eines Gebäudes zugewiesener Platz, der für das Lagern von Gegenständen vorgesehen ist. Speziell für das Lagern von schweren Gegenständen sind dafür verschiedene Lift- und Kransysteme mit einer Portalstruktur bekannt. Dabei sollte der zur Verfügung stehende Lagerraum optimal genutzt werden. Deshalb werden die Gegenstände, falls möglich, aufeinander gestapelt.

Aber stapelbare Gegenstände können nicht beliebig hoch gestapelt werden. Ab einer gewissen Höhe wird der Stapel instabil und droht umzufallen. Zudem können Gegenstände, die sich unten im Stapel befinden, durch das Gewicht der darüberliegenden Gegenstände beschädigt werden. Zum Beispiel sollte beim Stapeln von Reifen für Autos, Lastwagen etc. die Stapelhöhe in der Regel nicht höher als 2 m sein, weil ansonsten die unteren Reifen durch das Gewicht der darüberliegenden Reifen zusammengequetscht und dadurch beschädigt werden. Auch Behälter wie z. B. Schachteln lassen sich oft nicht in beliebiger Höhe stapeln, ohne dass sie beschädigt werden. Aufgrund der Beschränkung der Stapelhöhe wird zum Beispiel in hohen Lagerhallen oder im Freien der zur Verfügung stehende Lagerraum nicht optimal genutzt. Zum Teil wird versucht, dies mit baulichen Massnahmen zu umgehen. Zum Beispiel, indem mehrgeschossige Lagerhallen gebaut werden. Solche Lösungen sind aber sehr aufwändig und teuer und erschweren die Lagerhaltung.

### Darstellung der Erfindung

Aufgabe der Erfindung ist es, eine dem eingangs genannten technischen Gebiet zugehörende Anlage zu schaffen, welche einen vorhandenen Lagerraum für stapelbare Gegenstände optimal nutzt.

Die Lösung der Aufgabe ist durch die Merkmale des Anspruchs 1 definiert. Gemäss der Erfindung umfasst eine erfindungsgemässe Anlage eine Portalstruktur mit einer ersten Portalbrücke in einem ersten Lagerbereich, die in einer ersten Horizontalebene in einer ersten horizontalen Richtung bewegbar ist. An der ersten Portalbrücke ist mindestens ein erster Schlitten zum Transportieren von Gegenständen entlang der ersten Portalbrücke verfahrbar angeordnet. Zusätzlich zur ersten Portalbrücke umfasst die Portalstruktur noch mindestens eine zweite Portalbrücke in einem zweiten Lagerbereich, die unabhängig von der ersten Portalbrücke in einer zweiten Horizontalebene in einer zweiten horizontalen Richtung bewegbar ist. Die zweite Horizontalebene ist dabei höher als die erste Horizontalebene. Zudem entspricht die zweite horizontale Richtung bevorzugt der ersten horizontalen Richtung, dies ist jedoch nicht zwingend. Auch an der zweiten Portalbrücke ist mindestens ein zweiter Schlitten zum Transportieren von Gegenständen entlang der zweiten Portalbrücke verfahrbar angeordnet. Auf einer dritten Horizontalebene der Anlage, die zwischen der ersten Horizontalebene und der zweiten Horizontalebene liegt, ist an der Portalstruktur ein Zwischenboden befestigt, der den ersten und den zweiten Lagerbereich trennt und geeignet ist, Gegenstände aufzunehmen.

Indem die Portalstruktur eine zweite Portalbrücke über der ersten Portalbrücke aufweist, kann ein zweiter Lagerbereich erschlossen werden. Dadurch wird der Freiraum oberhalb eines Stapels von Gegenständen ebenfalls nutzbar. Indem der Zwischenboden direkt an der Portalstruktur befestigt ist, sind keine zusätzlichen baulichen Massnahmen an der Lagerhalle notwendig. Zudem ermöglicht die zweite verfahrbare Portalbrücke ein schnelleres Verschieben von Gegenständen ins Lager oder aus dem Lager.

Die erfindungsgemässe Anlage unterscheidet sich von mehrstöckigen Anlagen mit einem mit dem Gebäude fest verbunden Zwischenboden. Solche Anlagen bestehen im Wesentlichen aus Zwischengeschossen des Gebäudes, auf denen jeweils eine Anlage mit einer Portalstruktur installiert ist. Dabei steht zumindest ein Teil der Portalstruktur auf dem Zwischengeschoss. Dies im Unterschied zur erfindungsgemässen Anlage, bei der der Zwischenboden direkt an der Portalstruktur befestigt ist und welche kein mehrgeschossiges Gebäude erfordert.

Die erfindungsgemässe Anlage kann zweistöckig ausgebildet sein, also zwei übereinander angeordnete Portalbrücken und einen Zwischenboden aufweisen. Sie kann aber auch dreistöckig ausgebildet sein, also drei übereinander angeordnete Portalbrücken und zwei Zwischenböden aufweisen. Ferner kann die erfindungsgemässe Anlage auch mehr als drei Stöcke aufweisen.

In einem oder beiden Geschossen können eine, zwei oder mehrere Portalbrücken vorhanden sein.

Bei den gelagerten Gegenständen kann es sich beispielsweise um Gebinde wie Kisten oder Schachteln oder um andere insbesondere stapelbare Gegenstände wie z. B. Reifen handeln. Die Gegenstände können in die Anlage eingelagert, flexibel aus dieser entnommen oder in dieser von einem Platz auf einen anderen verschoben werden.

In einer bevorzugten Ausführungsform sind am ersten Schlitten ein erster Greifer und am zweiten Schlitten ein zweiter Greifer derart angebracht, dass der erste Greifer Gegenstände, die sich im ersten Lagerbereich, insbesondere auf einem Grundboden, befinden, ergreifen kann und der zweite Greifer seinerseits Gegenstände, die sich im zweiten Lagerbereich, insbesondere also auf dem Zwischenboden, befinden, ergreifen kann. Die jeweilige Ausführungsform der Greifer ist dabei an die zu lagernden Gegenstände angepasst. Greifer haben den Vorteil, dass sie, je nach Gegenstand, diesen ohne Hilfsmittel, wie zum Beispiel ein Traggestell, ergreifen können.

Alternativ sind anstelle der Greifer andere Vorrichtungen, zum Beispiel feststellbare Haken, vorstellbar. Diese Haken können beispielsweise mit Traggestellen zusammenwirken, auf denen die Gegenstände gelagert sind,

In einer bevorzugten Ausführungsform sind die Greifer derart ausgestaltet, dass sie von einem Stapel von Gegenständen eine vorgegebene Anzahl Gegenstände entfernen respektive diesem eine vorgegebene Anzahl Gegenstände zuführen können. Dies bringt den Vorteil, dass mehrere Gegenstände zur gleichen Zeit verschoben werden können. Dies beschleunigt das Zu- und Abführen von Gegenständen.

Alternativ sind Greifer vorstellbar, die jeweils nur einen Gegenstand auf einmal verschieben können. Diese Variante kann auch durch die Art des Gegenstands bedingt sein.

In einer bevorzugten Ausführungsform ist eine Vorrichtung vorhanden, die die Gegenstände zwischen den Lagerbereichen verschieben kann. Eine solche Vorrichtung kann insbesondere ein Lift sein. Dieser Lift kann von einer dazu bestimmten Austauschstelle des einen Lagerbereichs einen oder mehrere Gegenstände gleichzeitig zu einer dafür bestimmten Austauschstelle des anderen Lagerbereichs verschieben. Die jeweiligen Greifer bzw. Transportelemente in den Lagerbereichen können dann ihrerseits Gegenstände zu diesen Austauschstellen hin bewegen oder von diesen entfernen. Dies ermöglicht den direkten und damit schnellen und einfachen Austausch von Gegenständen zwischen den Lagerbereichen. Dadurch können die verschiedenen Lagerbereiche als Ganzes besser organisiert werden.

Alternativ kann ein solcher Austausch mit einer externen Vorrichtung, zum Beispiel einer mobilen Vorrichtung in der Form eines Gabelstaplers, geschehen.

In einer bevorzugten Ausführungsform der Anlage, welche über Greifer zum Ergreifen der Gegenstände verfügt, können der erste und/oder der zweite Greifer derart bewegbar sein, dass sie in den jeweiligen anderen Lagerbereich hineingreifen können und so Gegenstände von einem Lagerbereich in den anderen Lagerbereich verschieben können. Der zweite Greifer kann beispielsweise in vertikaler Richtung derart weit nach unten verfahren werden, dass er am entsprechenden Ort des ersten Lagerbereichs abgelegte Gegenstände direkt ergreifen kann. Dies bringt zusätzlich zum Vorteil, dass Gegenstände zwischen den Lagerbereichen ausgetauscht werden können, noch den Vorteil, dass dazu keine zusätzliche Vorrichtung benötigt wird und daher Platz gespart werden kann.

Alternativ kann wie oben beschrieben eine zusätzliche Vorrichtung dieselbe Funktion übernehmen.

In einer bevorzugten Ausführungsform sind in jedem Lagerbereich mindestens eine Gegenstandzuführung und mindestens eine Gegenstandabführung vorhanden. Dabei kann es sich bei der Gegenstandzuführung sowie der Gegenstandabführung um die gleiche Vorrichtung handeln, oder es sind zwei verschiedene Vorrichtungen dafür vorgesehen. Dies hat den Vorteil, dass Gegenstände effizienter den Lagerbereichen zugeführt sowie aus diesen entfernt werden können. Zudem wird eine automatisierte Organisation des Lagerraumes ermöglicht. So können zum Beispiel die Anzahl sowie die Art der Gegenstände, die sich im Lager befinden, erfasst werden. Die Anzahl der Gegenstandzuführungen sowie Gegenstandabführungen kann den vorgesehenen Fluktuationen in den entsprechenden Lagerbereichen angepasst werden. Mit Vorteil ist pro Portalbrücke mindestens eine Gegenstandzuführung sowie eine Gegenstandabführung vorhanden. Pro Lagerbereich können somit mehrere Gegenstandzuführungen sowie Gegenstandabführungen vorhanden sein.

Alternativ können externe Vorrichtungen, zum Beispiel Gabelstapler, Gegenstände dem Lager zu- respektive aus diesem abführen.

In einer bevorzugten Ausführungsform handelt es sich beim Zwischenboden um eine Leichtkonstruktion, zum Beispiel um eine gitterartige Konstruktion. Eine mögliche Ausführungsform besteht aus einem lamellenartigen Riffelblech. Dies bringt den Vorteil, dass durch die leichte Ausführungsform das Gesamtgewicht der Anlage verringert wird.

Alternativ sind auch massivere Konstruktionen vorstellbar. Je nach Gewicht der Gegenstände ist die Ausführungsform des Zwischenbodens anzupassen.

In einer bevorzugten Ausführungsform ist der Zwischenboden mit einer Brandschutzanlage, insbesondere einer Sprinkleranlage, versehen. Dies bringt den Vorteil, dass die Brandschutzanlage direkt über den zu lagernden Gegenständen angeordnet werden kann. In dieser Weise ist auch sichergestellt, dass zum Beispiel bei einer Sprinkleranlage die Gegenstände im ersten Lagerbereich nicht vom Zwischenboden verdeckt werden und somit von einer an der Decke der Lagerhalle angebrachten Sprinkleranlage nicht direkt erreicht werden können. Somit ist ein wirksamer Brandschutz möglich.

Alternativ kann ein Brandschutz in anderen Teilen der Portalstruktur oder der Lagerbereiche eingebaut sein. Je nach Situation kann sogar ganz darauf verzichtet werden.

In einer bevorzugten Ausführungsform ist der Zwischenboden derart an der Portalstruktur befestigt, dass dadurch die Portalstruktur stabilisiert wird. In dieser Ausführungsform dient der Zwischenboden nicht nur als eine Ablagefläche der Gegenstände, sondern dient der Portalstruktur zusätzlich noch als Verstrebung, die der ganzen Konstruktion einen zusätzlichen Halt gibt. Der Zwischenboden dient aber nicht - wie ein Zwischengeschoss eines Gebäudes - als Basis für die zweite (obere) Portalbrücke.

Alternativ kann der Zwischenboden, je nach zu lagerndem Gegenstand, sehr leicht konstruiert sein. Die Stabilität der Portalstruktur wird dann durch andere Elemente der Portalstruktur sichergestellt.

Bevorzugt umfasst die Anlage mehrere sich in vertikaler Richtung erstreckende Stützpfeiler, an welchen Längsbalken zur verschieblichen Lagerung der Portalbrücken sowie auch der Zwischenboden befestigt und gelagert sind. Besonders bevorzugt sind die Längsbalken sowohl für die erste Portalbrücke im ersten Lagerbereich als auch für die zweite Portalbrücke im zweiten Lagerbereich an denselben Stützpfeilern gelagert. Dies ermöglicht eine besonders einfache Konstruktung und eine gute Raumausnutzung. Alternativ sind für die erste Portalbrücke und die zweite Portalbrücke separate Stützpfeiler vorhanden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine Seitenansicht einer erfindungsgemässen Anlage;
- Fig. 2: einen Grundriss eines zweiten Lagerbereiches einer erfindungsgemässen Anlage.

Grundsätzlich sind in den Figuren gleiche Teile mit gleichen Bezugszeichen versehen.

### Wege zur Ausführung der Erfindung

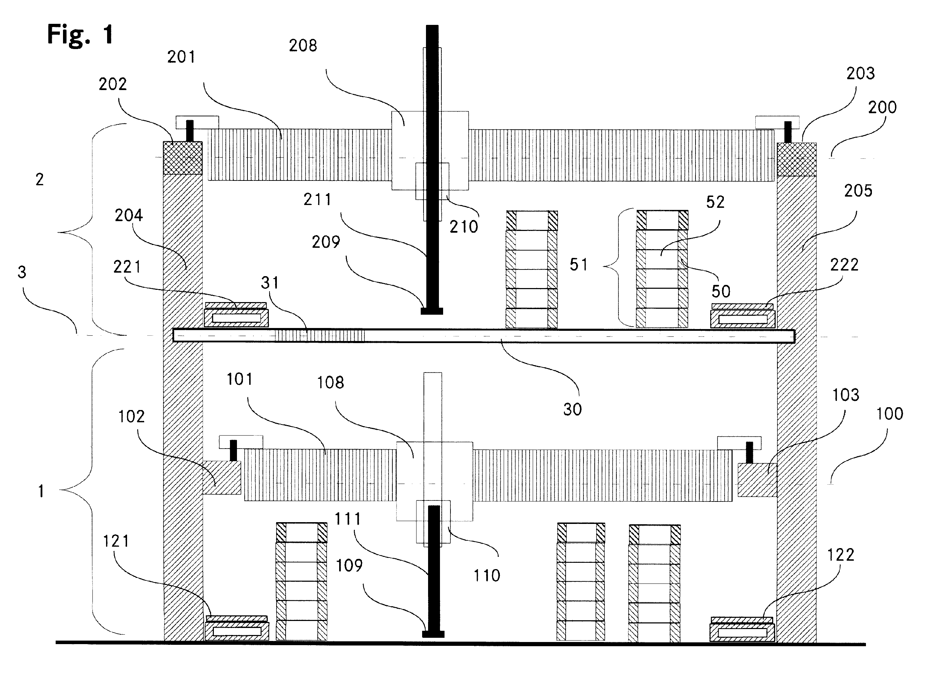

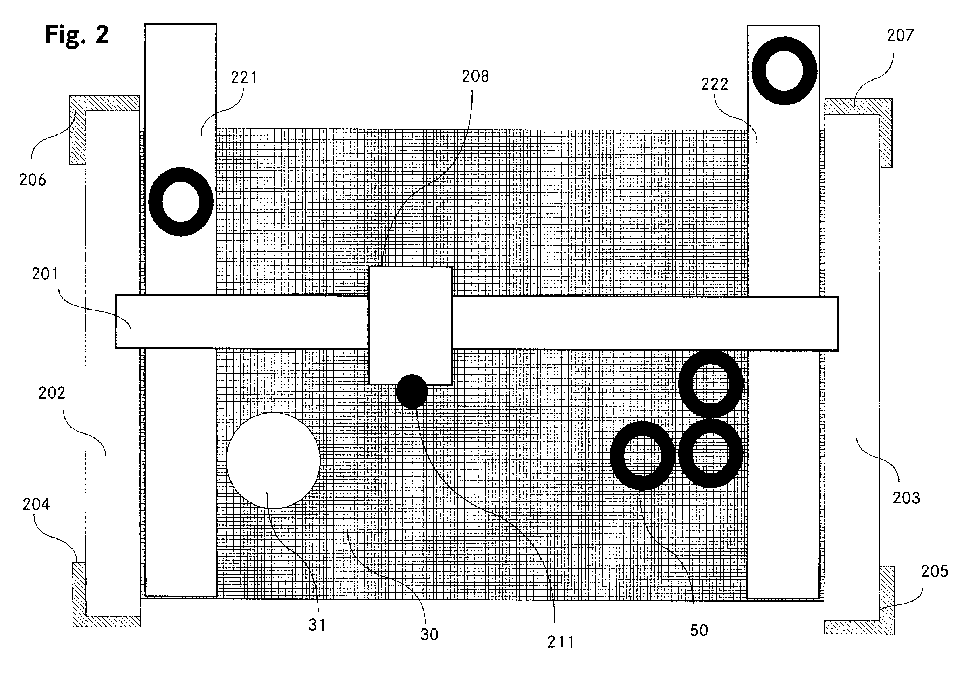

Die Figur 1 zeigt eine schematische Seitenansicht einer erfindungsgemässen Anlage mit einer Portalstruktur zum Lagern von Gegenständen. Die Figur 2 stellt einen schematischen Grundriss des zweiten Lagerbereiches der erfindungsgemässen Anlage dar. Bei dieser Ausführungsform sind die Gegenstände Reifen 50, die turmähnlich gestapelt werden, eine analoge Ausführungsform ist aber auch für das Bewirtschaften eines Lagers für andere Gegenstände, z. B. Kisten oder andere Gebinde, nutzbar. Die Reifen 50 sind dabei so aufeinander gestapelt, dass hohlzylinderförmige Stapel 51 gebildet werden. Somit ergibt sich eine vertikal orientierte Stapelachse 52. Die maximale Stapelhöhe der Reifen 50 beträgt circa 2,2 Meter. Werden die Reifen 50 höher gestapelt, so können die untersten Reifen 50 durch das Gewicht der oberen Reifen 50 beschädigt werden.

In einem ersten Lagerbereich 1 ist in einer ersten Horizontalebene 100 eine erste Portalbrücke 101 vorhanden, die an deren Enden auf je einem Längsbalken 102 und 103 abstützt. Dabei steht die erste Portalbrücke 101 in einem rechten Winkel zu den Längsbalken 102 und 103. Die Längsbalken 102 und 103 sind ihrerseits an deren Enden auf Stützpfeilern 204, 205, 206 und 207 abgestützt (siehe auch Figur 2). Die Portalbrücke 101 ist entlang der Längsbalken 102 und 103 verschiebbar. Die Portalbrücke 101 hat einen quaderförmigen Querschnitt mit der ungefähren Dimension 0.8 m x 1.0 m. Die Länge der Portalbrücke 101 beträgt circa 20 m. Die Stützpfeiler 204, 205, 206 und 207 sind circa 0.4 m dick.

An der ersten Portalbrücke 101 ist ein in horizontaler Richtung bewegbarer erster Schlitten 108 angebracht, an dem ein erster Greifer 109 vorhanden ist. Es sind verschiedene Ausführungsformen von geeigneten Greifern 109 zum Handling von Reifen bekannt. Der hier gezeigte Greifer 109 besteht im Wesentlichen aus einer Betätigungsvorrichtung 110, die eine Stange 111 entlang einer Längsachse 112 vertikal hinauf- und hinunterbewegen kann. An einem unteren Ende der Stange 111 sind horizontal ausfahrbare Finger 113 angebracht, die sich zwischen aufeinandergestapelte Reifen 50 schieben können. Der Greifer 109 kann einen oder mehrere Reifen 50 gleichzeitig verschieben, indem die Stange 111 mit den zusammengefahrenen Fingern 113 entlang der Stapelachse 52 ins Innere des Stapels 51 geführt wird. Auf einer gewünschten Höhe werden die Finger 113 ausgefahren und zwischen zwei Reifen 50 geschoben. Wird die Stange 111 mit Hilfe der Betätigungsvorrichtung 110 anschliessend hinauf bewegt, so werden die Reifen 50, die sich über den Fingern 113 befinden, vom Stapel 51 abgehoben. In analoger Weise können Reifen 50 auch auf einen Stapel 51 abgelegt werden. Andere Greifer, welche insbesondere für das Handling von Kisten geeignet sind, gehen beispielsweise aus der EP 1 620 332 B1 (Güdel Group AG) hervor.

In einem zweiten Lagerbereich 2 befindet sich in einer zweiten Horizontalebene 200 eine zweite Portalbrücke 201, die ihrerseits an deren Enden von Längsbalken 202 und 203 getragen wird. Die Längsbalken 202 und 203 der zweiten Lagerebene 2 werden ebenfalls von den je zwei Stützpfeilern 204, 205, 206 und 207 an deren Enden getragen (siehe auch Figur 2). Analog zur ersten Portalbrücke 101 ist an der zweiten Portalbrücke 201 ebenfalls ein zweiter Schlitten 208 angebracht, an dem sich ein zweiter Greifer 209 mit einer zweiten Betätigungsvorrichtung 210, mit einer zweiten Stange 211 und Fingern 213 befindet. Die Dimensionen und Ausführungsform der zweiten Portalbrücke 201, des zweiten Schlittens 208, sowie der zweiten Greifer 209 des zweiten Lagerbereiches 2 entsprechen im Wesentlichen denen des ersten Lagerbereiches 1.

Der zweite Lagerbereich 2 ist von dem darunterliegenden ersten Lagerbereich 1 durch einen in einer dritten Horizontalebene 3 liegenden, rechteckigen Zwischenboden 30 getrennt. Der Zwischenboden 30 ist an den Stützpfeilern 204, 205, 206 und 207 der Längsbalken 102, 103 der ersten Portalbrücke 101 sowie der Längsbalken 202 und 203 der zweiten Portalbrücke 201 angebracht. Dieser Zwischenboden 30 ist gitterartig, bestehend aus einem lamellenförmigen Riffelblech. Reifen 50 im zweiten Lagerbereich 2 werden auf diesen Zwischenboden 30 gelagert. Das Ergreifen, Verschieben und Ablegen der Reifen 50 im zweiten Lagerbereich 2 erfolgt in analoger Weise zum ersten Lagerbereich 1. Indem der Zwischenboden 30 an den Ecken an den zweiten Stützpfeilern 204, 205, 206 und 207 der Längsbalken 202 und 203 der zweiten Portalbrücke 201 angebracht ist, erhöht er die Stabilität der Portalstruktur.

Der Zwischenboden 30 befindet sich in einer Höhe von ca. 5.0 m. Bei einer maximalen Stapelhöhe von je 2.2 m ergibt sich eine Gesamthöhe der zweistöckigen Portalstruktur von ca. 10.0 m, sie lässt sich somit eine Lagerhalle mit einer Innenhöhe von 10.5 m oder mehr einbauen. Mit einer entsprechenden Struktur lassen sich Lasten von 1500 kg heben. In Längs- und Querrichtung lassen sich Geschwindigkeiten von 300 m/min und Beschleunigungen von 6 m/s² erreichen, in vertikaler Richtung ist eine Geschwindigkeit von 160 m/min erreichbar bei maximalen Beschleunigungen von 10 m/s².

Damit Reifen 50 in oder aus dem ersten, sowie dem zweiten Lagerbereich 1 und 2 verschoben werden können, sind pro Ebene je eine Gegenstandszuführung und eine Gegenstandsabführung vorhanden. Sie sind durch zwei Förderbänder 121, 122 im ersten Lagerbereich 1 sowie zwei Förderbänder 221, 222 im zweiten Lagerbereich gebildet, die sich parallel zu den Längsbalken 102, 103, 202, 203 erstrecken und in die jeweiligen Lagerbereiche 1 und 2 hineinreichen. Die Greifer 109 und 209 können dann - insbesondere an einer bestimmten Austauschstelle in ihrem Lagerbereich 1 und 2 - die Reifen 50 vom entsprechenden Förderband 121, 122, 221, 222 nehmen oder darauf ablegen, je nachdem ob ein Reifen 50 bzw. ein Stapel 51 zugeführt oder abgeführt werden soll. Dabei kann ein Förderband 121, 122, 221, 222 entweder nur als Gegenstandzuführung oder Gegenstandabführung dienen, oder ein Förderband 121, 122, 221, 222 kann beide Aufgaben erfüllen. Die Anzahl der Förderbänder zur Zuführung sowie Abführung von Reifen pro Lagerbereich 1 und 2 kann von Anlage zu Anlage variieren, je nachdem wie häufig Reifen 50 in respektive aus dem jeweiligen Lagerbereich 1 und 2 zurespektive abgeführt werden.

Mit der Hilfe einer Öffnung 31 im Zwischenboden 30 in der Form eines ausreichend grossflächigen Durchbruchs können Reifen 50 zwischen dem ersten und dem zweiten Lagerbereich 1 und 2 verschoben werden. Die Grösse sowie die Position der Öffnung 31 sind so gewählt, dass zum Beispiel der zweite Greifer 209 Reifen 50 durch die Öffnung 31 hindurch verschieben kann. Die Länge der zweiten Stange 210 des zweiten Greifers 209 ist so bemessen, dass der zweite Greifer 209 vom zweiten Lagerbereich 2 aus durch die Öffnung 31 in den ersten Lagerbereich 1 hineingreifen kann und Reifen 50 in den ersten Lagerbereich 1 hin- oder wegbewegen kann. Zu diesem Zweck ist die Stange 210 in an sich bekannter Weise teleskopierbar ausgebildet. Anstelle der Öffnung 31 im Zwischenboden 30 und der Verlängerung der Stange 210 des zweiten Greifers 209 ist auch denkbar, dass eine zusätzliche Lift- oder Krananlage (nicht eingezeichnet) den Austausch zwischen dem ersten und dem zweiten Lagerbereich 1, 2 ausführt.

Im Zwischenboden 30 können zudem verschiedene Sicherheitselemente, wie zum Beispiel eine Brandschutzanlage eingebaut sein. So kann zum Beispiel eine Sprinkleranlage an einer Unterseite des Zwischenbodens angebracht sein, die bei einem Brandausbruch direkt auf die darunter liegenden Reifen 50 im ersten Lagerbereich 1 einwirken kann.

Die in der Beschreibung erwähnten Greifer greifen in das Innere des Reifenstapels. Es können aber auch andere Typen von Greifern zum Einsatz kommen. Es sind beispielsweise Greifer denkbar, die die Reifen von aussen ergreifen. Auch können die Finger unterschiedlich bewegt werden: zum Beispiel pneumatisch, hydraulisch oder mit der Hilfe eines Elektromotors. Allgemein ist die Ausführungsform der Greifer den jeweiligen Gegenständen angepasst.

In der dargestellten Ausführungsform der erfindungsgemässen Anlage sind zwei Lagerbereiche beschrieben. Falls die Höhe des Lagerraums es zulässt, sind über dem zweiten Lagerbereich weitere, jeweils durch Zwischenböden getrennte Lagerbereiche vorstellbar.

Anstelle der beschriebenen Förderbänder zur Gegenstandszuführung, sowie Abführung können externe Kran- oder Liftanlagen die gleiche Funktion wie die Förderbänder erfüllen.

Anstatt dass der zweite Greifer wie beschrieben in den ersten Lagerbereich hineingreifen kann, ist auch vorstellbar, dass der erste Greifer in den zweiten Lagerbereich hineingreifen kann, oder dass beide Greifer in den jeweils anderen Lagerbereich hineingreifen können. Zudem ist auch möglich, dass mit Hilfe einer Kran- oder Liftanlage Gegenstände zwischen den beiden Lagerbereichen ausgetauscht werden können. Dabei kann diese Kranrespektive Liftanlage ebenfalls eine Öffnung im Zwischenboden zum Verschieben der Gegenstände benutzen, oder sie ist seitlich des Zwischenbodens angeordnet.

Die Ausführungsform des rechteckigen Zwischenbodens kann variieren. Mit Vorteil ist es eine Leichtkonstruktion, die an den Ecken an den Stützpfeilern des zweiten Lagerbereichs befestigt ist. Damit das Gewicht des Zwischenbodens verringert werden kann, sind auch Aussparungen im Zwischenboden vorstellbar, der Zwischenboden kann zum Beispiel als Lochblech ausgeführt sein. Die Leichtkonstruktion muss stabil genug sein, das Gewicht eines vollen Lagerbereichs tragen zu können.

In der Ausführungsform ist pro Lagerbereich eine Portalbrücke mit einem Schlitten und einem Greifer vorhanden. In einer Abwandlung der erfindungsgemässen Anlage können auch mehrere Greifer pro Lagerbereich vorhanden sein. Diese zusätzlichen Greifer können entweder am selben Schlitten oder an einem zusätzlichen Schlitten, an der gleichen Portalbrücke oder an einer zusätzlichen Portalbrücke befestigt sein. Dabei können die zusätzlichen Greifer in einem Lagerbereich auf unterschiedliche Stapel oder auf die gleichen Stapel Zugriff haben.

Es sind verschiedene Brandschutzsysteme möglich, die an der Unterseite des Zwischenbodens befestigt sind. Welche Art von Brandschutzmittel eingesetzt wird, wird vor allem durch die zu lagernden Gegenstände bestimmt. Es kann dies zum Beispiel Wasser, Staub oder Trockeneis (CO₂) sein. Zudem können weitere Sicherheitselemente am Zwischenboden befestigt sein. Zum Beispiel ist es denkbar, ein Warnsystem im Zwischenboden zu installieren, das erkennt, wenn eine Person sich in eine Gefahrenzone eines Lagerbereichs begibt. Die Anlage kann dann automatisch gestoppt werden.

Im gezeigten Ausführungsbeispiel werden für die erste Horiztonalebene und die zweite Horizontalebene dieselben Stützpfeiler verwendet. Es ist grundsätzlich ebenfalls möglich, die Längsbalken von zwei oder mehr Horizontalebenen (sowie auch die Zwischenböden) an verschiedenen Stützpfeilern zu lagern. Ferner werden je nach flächiger Ausdehnung der Lagerbereiche mehr als vier Stützpfeiler verwendet. Beispielsweise sind seitlich der Längsträger in regelmässigen Abständen Stützpfeiler vorhanden, an welchen die Längsträger gelagert sind.

Das Ausführungsbeispiel ist eine erfindungsgemässe Anlage für Reifen. Es sind analoge Anlagen möglich, die andersartige Gegenstände, stapelbare, sowie nicht stapelbare, lagern.

Zusammenfassend ist festzustellen, dass durch die Erfindung eine Anlage geschaffen wird, die einen vorhandenen Lagerraum optimal nutzt.

## Patentansprüche

1. Anlage zum Lagern von Gegenständen (50), umfassend eine Portalstruktur mit einer ersten Portalbrücke (101)in einem ersten Lagerbereich (1), die in einer ersten Horizontalebene (100) in einer ersten horizontalen Richtung bewegbar ist, mindestens einer zweiten Portalbrücke (201) in einem zweiten Lagerbereich (1), die unabhängig von der ersten Portalbrücke (101) in einer zweiten Horizontalebene (200) in einer zweiten horizontalen Richtung bewegbar ist, wobei die zweite Horizontalebene (200) höher ist als die erste Horizontalebene (100) und wobei die zweite horizontale Richtung bevorzugt der ersten horizontalen Richtung entspricht, wobei an der ersten Portalbrücke (101) mindestens ein erster Schlitten (108) zum Transportieren von Gegenständen (50) entlang der ersten Portalbrücke (101) verfahrbar angeordnet ist, wobei an der zweiten Portalbrücke (201) mindestens ein zweiter Schlitten (208) zum Transportieren von Gegenständen (50) entlang der zweiten Portalbrücke (208) verfahrbar angeordnet ist, und wobei mindestens in einer dritten Horizontalebene (3), die zwischen der ersten Horizontalebene (100) und der zweiten Horizontalebene (200) liegt, ein Zwischenboden (30), der den ersten und den zweiten Lagerbereich (1, 2) trennt, zum Aufnehmen von Gegenständen (50) an der Portalstruktur befestigt ist.

2. Anlage nach Anspruch 1, **dadurch gekennzeichnet, dass** am ersten Schlitten (108) ein erster Greifer (109) vorhanden ist, der Gegenstände (50), insbesondere von einem Grundboden, ergreifen kann und am zweiten Schlitten (208) ein zweiter Greifer (209) vorhanden ist, der Gegenstände (50), insbesondere vom Zwischenboden (30), ergreifen kann.

3. Anlage nach Anspruch 2, **dadurch gekennzeichnet, dass** der erste und der zweite Greifer (209) vertikal derart verschiebbar sind, dass sie von einem Stapel (51) von vertikal gestapelten Gegenständen (50) eine definierte Anzahl von Gegenständen (50) ergreifen können.

4. Anlage nach einem der Ansprüche 1 bis 3, **dadurch gekennzeichnet, dass** eine Vorrichtung, insbesondere ein Lift, vorhanden ist, die Gegenstände zwischen dem ersten und der zweiten Lagerbereich (1, 2) verschieben kann.

5. Anlage nach einem der Ansprüche 2 oder 3, **dadurch gekennzeichnet, dass** zumindest der erste oder der zweite Greifer (109, 209) derart bewegbar ist, dass Gegenstände (50) zwischen dem ersten und der zweiten Lagerbereich (1, 2) verschiebbar sind.

6. Anlage nach einem der Ansprüche 1 bis 5, **dadurch gekennzeichnet, dass** auf jeder Horizontalebene (100, 200) mindestens eine Gegenstandzuführung (121, 221) und mindestens eine Gegenstandabführung (122, 222) vorhanden sind.

7. Anlage nach einem der Ansprüche 1 bis 6, **dadurch gekennzeichnet, dass** der Zwischenboden (30) gitterartig ist.

8. Anlage nach einem der Ansprüche 1 bis 7, **dadurch gekennzeichnet, dass** der Zwischenboden (30) mit einer Brandschutzvorrichtung, insbesondere einer Sprinkleranlage, versehen ist.

9. Anlage nach einem der Ansprüche 1 bis 8, **dadurch gekennzeichnet, dass** der Zwischenboden (30) derart an der Portalstruktur befestigt ist, dass er die Portalstruktur stabilisiert.
